# EUROPEAN PATENT SPECIFICATION

(11) **EP 3 618 549 B1**
(45) Date of publication and mention of the grant of the patent: **06.11.2024**
(21) Application number: 17906951.3
(22) Date of filing: 28.04.2017
(51) Int. Cl.: H04W 72/50, H04L 5/00, H04W 72/23

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 04.03.2020
(73) Proprietor: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2017/082571
(87) International publication number: WO 2018/195980

(56) References cited:
- CN-A- 103 384 185
- CN-A- 104 105 203
- CN-A- 106 162 697
- US-A1- 2017 041 119
- VIVO: "Proposal on the slot based dynamic TDD", vol. RAN WG1, no. Spokane, USA; 20170116 - 20170120, 16 January 2017 (2017-01-16), XP051207821, Retrieved from the Internet <URL:http://www.3gpp.org/ftp/Meetings_3GPP_SYNC/RAN1/Docs/> [retrieved on 20170116]
- ZTE ZTE MICROELECTRONICS: "Discussion on dynamic TDD operations", vol. RAN WG1, no. Reno, USA; 20161114 - 20161118, 13 November 2016 (2016-11-13), XP051176110, Retrieved from the Internet <URL:http://www.3gpp.org/ftp/Meetings_3GPP_SYNC/RAN1/Docs/> [retrieved on 20161113]
- NTT DOCOMO ET AL: "Mechanisms for dynamic TDD", vol. RAN WG1, no. Lisbon, Portugal; 20161010 - 20161014, 9 October 2016 (2016-10-09), XP051150110, Retrieved from the Internet <URL:http://www.3gpp.org/ftp/Meetings_3GPP_SYNC/RAN1/Docs/> [retrieved on 20161009]

## Description

### TECHNICAL FIELD

The present disclosure relates to the field of wireless communication, and in particular, to a data transmission method and apparatus.

### BACKGROUND

In practical application, data transmission in a wireless communication system is generally performed in a form of data frames, and different subframes in a data frame may have different transmission directions. That is, the transmission direction of some subframes in a data frame may be an uplink direction, and the transmission direction of some subframes in a data frame may be a downlink direction. In the subframes whose transmission direction is the downlink direction, a terminal may receive data sent by a base station; and in the subframes whose transmission direction is the uplink direction, the terminal may send data to the base station. In order to ensure that the data transmission between the terminal and the base station is performed, the terminal and the base station need to settle the transmission direction of each subframe in the data frame.

In the related art, the wireless communication system may pre-configure the transmission direction of each subframe in the data frame, and the terminal and base station may perform data transmission based on the pre-configure direction. For example, if the wireless communication system pre-configures that the transmission direction of the 1^{st}, 3^{rd}, 4^{th}, 5^{th}, 6^{th}, 7^{th}, 8^{th}, 9^{th} and 10^{th} subframes is the downlink direction, and the transmission direction of the 2^{nd} subframe is the uplink direction, the terminal may transmit the data to the base station in the 2^{nd} subframe, and receive the data sent by the base station in the 1^{st}, 3^{rd}, 4^{th}, 5^{th}, 6^{th}, 7^{th}, 8^{th}, 9^{th} and 10^{th} subframes.

However, the manner in the related art regarding pre-specifying the transmission direction of each subframe in the data frame has a low flexibility, and may not adapt to the requirement of a new-generation communication system on dynamically changing transmission directions.

VIVO: "Proposal on the slot based dynamic TDD",3GPP DRAFT; R1-1700283_PROPOSAL ON THE SLOT BASED DYNAMIC TDD, 3RD GENERATION PARTNERSHIP PROJECT (3GPP),MOBILE COMPETENCE CENTRE ; 650, ROUTE DES LUCIOLES ;F-06921 SOPHIA-ANTIPOLIS CEDEX; FRANCE discloses a preliminary simulation results for traffic adaptation performance of different slot adjustment periods in a single cell scenario. Based on the observations of simulation results, we further discuss and propose the mechanism of slot type indication and downlink control signaling design.

ZTE MICROELECTRONICS: "Discussion on dynamic TDD operations", 3GPP DRAFT; R1-1612158 - 7.1.6.2 DYNAMIC TDD OPERATIONS, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE discloses how to implement duplex. Besides, the corresponding scheduling and HARQ influence are also discussed.

NTT DOCOMO ET AL: "Mechanisms for dynamic TDD", 3GPP DRAFT; R1-1610085, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE discloses several aspects with respect to dynamic TDD in the context of NR. The possible time-scales of dynamic TDD are discussed first based on the agreement on frame structure in RAN1.#86 meeting. Then, potential necessary mechanisms to enable dynamic TDD operation in NR are discussed, including interference management, flexible timing and other related aspects.

### SUMMARY

Embodiments of the present disclosure provide a data transmission method and apparatus.

In a first aspect, a data transmission method according to claim 1, for applying to a terminal, is provided.

In a second aspect, a terminal is provided according to claim 5.

Further aspects and embodiments are defined in the appended claims.

The technical solutions according to embodiments of the present disclosure may include following advantageous effects.

The terminal may receive target indication information sent by the base station, determine transmission directions of n transmission units based on the target indication information, and then transmit data through the n transmission units based on the determined transmission directions. In this way, the transmission directions of the transmission units can be determined flexibly, and can be dynamically changed according to the data transmission requirement of the communication system, thereby meeting the requirement of the new-generation communication system on the dynamically changing transmission directions.

It should be understood that the above general description and the following detailed description are merely exemplary and explanatory, and do not limit the present disclosure.

### BRIEF DESCRIPTION OF THE DRAWINGS

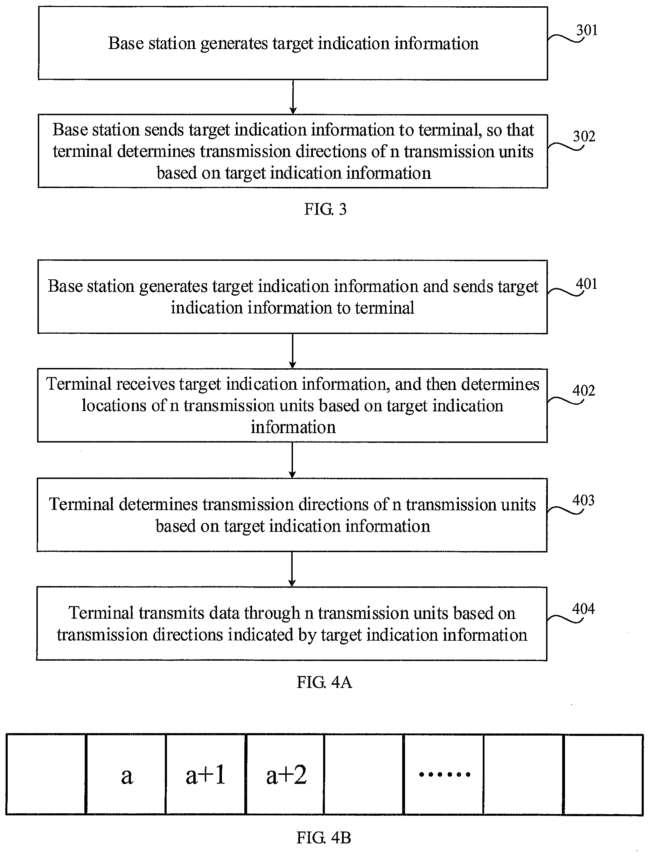

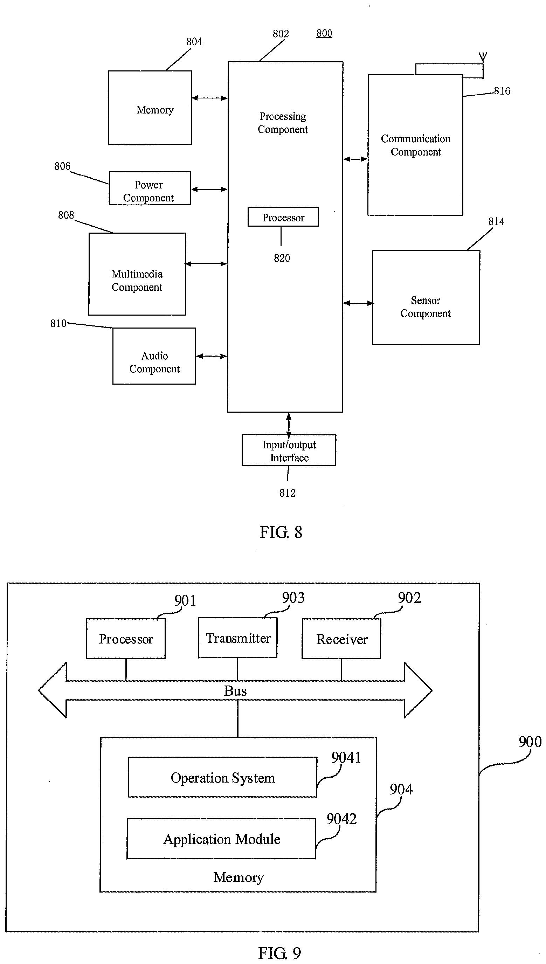

The accompanying drawings, which are incorporated in and constitute a part of this specification, illustrate embodiments consistent with the present disclosure and, together with the description, serve to explain the principles of the present disclosure. In the following, embodiments of the invention are described with particular reference to figures 4A and 8. The other embodiments and/or examples of the disclosure are provided for illustrative purposes to support a better understanding of the invention.
FIG. 1 is a schematic diagram of a wireless communication system according to an embodiment.
FIG. 2 is a flow chart of a data transmission method according to an embodiment.
FIG. 3 is a flow chart of a data transmission method according to an embodiment.
FIG. 4A is a flow chart of a data transmission method according to an embodiment.
FIG. 4B is a schematic diagram of locations of n transmission units according to an embodiment.
FIG. 5 is a block diagram of a data transmission apparatus according to an embodiment.
FIG. 6 is a block diagram of a data transmission apparatus according to an embodiment.
FIG. 7 is a block diagram of a data transmission apparatus according to an embodiment.
FIG. 8 is a block diagram of a data transmission apparatus according to an embodiment.
FIG. 9 is a block diagram of a data transmission apparatus according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of devices and methods consistent with aspects related to the disclosure as recited in the appended claims.

In exemplary embodiments, a wireless communication system generally includes two duplexing modes, which are frequency division duplexing (FDD) mode and time division duplexing (TDD) mode, respectively. In the FDD mode, data transmission in the uplink direction (the terminal sending data to the base station) and data transmission in the downlink direction (the base station sending data to the terminal) are performed on an uplink channel and a downlink channel, respectively. Under this case, the transmission direction of each subframe in a data frame on the uplink channel is the uplink direction, and the transmission direction of each subframe in a data frame on the downlink channel is the downlink direction. In the TDD mode, data transmission in the uplink direction and data transmission in the downlink direction are both performed on a channel having a same frequency. Under this case, the transmission direction of some subframes in a data frame on the channel is the downlink direction, and the transmission direction of some subframes is the uplink direction.

In order to ensure that the data transmission between the terminal and the base station is performed normally under the TDD mode, the terminal and the base station may need to agree on the transmission direction of each subframe in the data frame. In an embodiment, the wireless communication system may pre-specify the transmission direction of each subframe in the data frame, and the terminal and base station may perform the data transmission based on the pre-specified direction. Table 1 shows a pre-specified transmission direction of each subframe in seven data frames of the wireless communication system, according to an embodiment.

**Table 1**

| Sequence number | Downlink-to-uplink switching period | Subframe | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

The term "ms" in Table 1 denotes millisecond; the letter "D" in Table 1 denotes that the transmission direction of the subframe is the downlink direction; the letter "U" in Table 1 denotes that the transmission direction of the subframe is the uplink direction; and "S" denotes that the subframe is a special subframe, which may include an uplink pilot time slot (UpPTS), a downlink pilot time slot (DwPTS) and a guard period (GP), and is mainly configured to prevent interference from occurring between the downlink data transmission and the uplink data transmission.

When the terminal and the base station agree to perform the data transmission according to the specification of sequence number 5 in Table 1, the terminal may receive the data sent by the base station in the 0^{th} , 3^{rd}, 4^{th}, 5^{th}, 6^{th}, 7^{th}, 8^{th}, and 9^{th} subframes of the data frame, and send data to the base station in the 2^{nd} subframe.

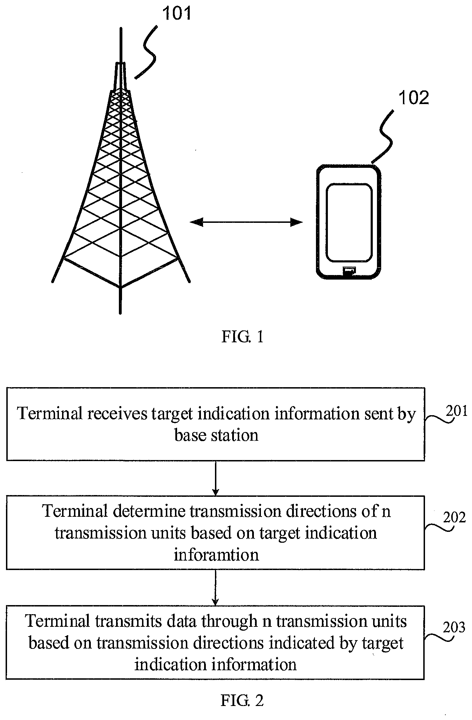

FIG. 1 is a schematic diagram of a wireless communication system according to an embodiment. The system may include a base station 101 and a terminal 102. The base station 101 and the terminal 102 may perform data transmission therebetween under the TDD mode in the uplink direction and the downlink direction based on the same channel.

FIG. 2 is a flow chart of a data transmission method according to an embodiment. For example, the data transmission method is adopted by a terminal, such as the terminal 102 shown in FIG. 1, and includes the following steps.

In step 201, the terminal receives target indication information sent by the base station.

In step 202, the terminal determines transmission directions of n transmission units based on the target indication information. The transmission directions include the uplink direction and the downlink direction, and n is a positive integer larger than or equal to 1.

In step 203, the terminal transmits data through the n transmission units based on the transmission directions indicated by the target indication information.

In the data transmission method according to the embodiment of the present disclosure, the terminal receives target indication information sent by the base station, determines transmission directions of n transmission units based on the target indication information, and then transmits data through the n transmission units based on the determined transmission direction. In this way, the transmission directions of the transmission units can be determined flexibly, and can be dynamically changed according to the data transmission requirement of the communication system, thereby meeting the requirement of the new-generation communication system on the dynamically changing transmission directions.

FIG. 3 is a flow chart of a data transmission method according to an embodiment that is not part of the present invention as claimed. For example, the data transmission method is adopted by a base station, such as the base station 101 shown in FIG. 1, and includes following steps.

In step 301, the base station generates target indication information.

In step 302, the base station sends the target indication information to the terminal, so that the terminal determines transmission directions of n transmission units based on the target indication information. The transmission directions include the uplink direction and the downlink direction, and n is a positive integer larger than or equal to 1.

In the data transmission method according to the embodiment of the present disclosure, the base station sends target indication information to the terminal, which enables the terminal to determine transmission directions of n transmission units based on the target indication information and then transmit data through the n transmission units based on the determined transmission directions. In this way, the transmission directions of the transmission units can be determined flexibly, and can be dynamically changed according to the data transmission requirement of the communication system, thereby meeting the requirement of the new-generation communication system on the dynamically changing transmission directions.

FIG. 4A is a flow chart of a data transmission method according to an embodiment. For example, the data transmission method is adopted by a wireless communication system, such the system shown in FIG. 1, and includes following steps.

In step 401, the base station generates target indication information, and sends the target indication information to the terminal.

In an embodiment, in order to meet the requirement of a new-generation communication system on the dynamically changing transmission directions, the base station may generate and send target indication information to the terminal, and the terminal determines transmission directions of n transmission units based on the target indication information, where n is a positive integer larger than or equal to 1. In this way, the base station and the terminal may agree on the transmission directions of the n transmission units based on the target indication information, and transmit data through the n transmission units based on the agreed transmission directions, which is more flexible compared to the manner in the wireless communication system regarding pre-specifying the transmission direction of each subframe in the data frame, and thereby more adaptable to the requirement of the new-generation communication system.

In the embodiment, the base station and the terminal generally transmit the data through data frames. The n transmission units are data frames, subframes, time slots, or orthogonal frequency division multiplexing (OFDM) symbols. In an embodiment, one data frame may include ten subframes, each of which has a length of 1 ms and includes two time slots; and each time slot has a length of 0.5 ms and includes seven OFDM symbols, each of which has a length of 1/14 ms.

In the related art, since the wireless communication system merely specifies the transmission directions of subframes in the data frame, the transmission directions of all the time slots and OFDM symbols included in a data subframe are all the same, which causes the data transmission direction to change in a low flexibility. However, in the embodiment of the present disclosure, the n transmission units may be transmission units (time slots, OFDM symbols) smaller than the subframes. Thus, the time slots and OFDM symbols included in a subframe may have different transmission directions, and the data transmission direction in the embodiment of the present disclosure may be changed more flexibly, which is thereby more adaptable to the requirement of the new-generation communication system.

In step 402, the terminal receives the target indication information, and then determines locations of the n transmission units based on the target indication information.

After receiving the target indication information, the terminal needs to determine locations of the n transmission units based on the target indication information. The present disclosure provides following two exemplary manners of determining locations of the n transmission units.

In the first manner, the terminal determines the transmission unit transmitting the target indication information as the target transmission unit; then, according to the location of the target transmission unit, the terminal determines locations of the n transmission units associated with the location of the target transmission unit.

In the embodiment, the terminal stores therein a location association rule that defines the location, relative to the location of the target transmission unit, of the transmission unit associated with the target transmission unit; then, the terminal determines the locations of the n transmission units based on the location of the target transmission unit and the location association rule. In the embodiment, the location association rule is sent by the base station in advance to the terminal through physical layer signalling. In an alternative procedure, which is not part of the present invention, the location association rule may be sent by the base station in advance through higher layer signalling or may be specified by the communication protocol. It should be noted that the high layer signaling may be RRC signaling, MAC CE signaling or the like, which will not be specifically limited in the present disclosure, either

In the embodiment of the present disclosure, the locations of the n transmission units as determined by the terminal based on the location association rule are as follows: the n transmission units are consecutively located after and adjacent to the target transmission unit.

For instance, as shown in FIG. 4B, the transmission unit transmitting the target indication information is the time slot a, which means that the time slot a is the target transmission unit. If the location association rule stored in the terminal is that the transmission units associated with the target transmission unit are two consecutive transmission units located after and adjacent to the target transmission unit, the terminal may determine that the n transmission units are time slot a+1 and time slot a +2.

In the second manner that is not part of the present invention as claimed, the target indication information may include location indication information that indicates locations of the n transmission units, and the terminal may determine locations of the n transmission units based on the location indication information.

As shown in the example of FIG. 4B, the target indication information may include location indication information indicating that the n transmission units are the time slot a+1 and time slot a+2.

In step 403, the terminal determines transmission directions of the n transmission units based on the target indication information.

After determining the locations of the n transmission units the terminal determines transmission directions of the n transmission units based on the target indication information. The present disclosure provides following two exemplary manners of determining transmission directions of the n transmission units.

In the first manner, the target indication information may include a composite indicator configured to indicate transmission directions of the n transmission units, and the terminal may determine the transmission directions indicated by the composite indicator as the transmission directions of the n transmission units.

In an embodiment, a mapping relationship table between the composite indicator and the transmission directions may be maintained in the terminal, as shown in Table 2.

**Table 2**

| Composite indicator | Transmission direction |
|---|---|
| 00 | DL |
| 01 | UL |
| 10 | DL dominant |
| 11 | UL dominant |

The term "DL" in Table 2 denotes that the transmission direction is the downlink direction; "UL" denotes that the transmission direction is the uplink direction; the term "DL dominant" in Table 2 denotes that the transmission direction is mainly the downlink direction; and the term "UL dominant" in Table 2 denotes that the transmission direction is mainly the uplink direction.

In an embodiment, the mapping relationship table may be sent by the base station in advance to the terminal through high layer signaling or physical layer signaling, or may be specified by the communication protocol, which will not be specifically limited in the embodiment of the present disclosure. Furthermore, it should be noted that the mapping relationship table shown in Table 2 is merely exemplary, and does not limit the present disclosure. It should be further noted that the high layer signaling may be RRC signaling, MAC CE signaling or the like, which will not be specifically limited in the embodiment of the present disclosure, either.

The terminal may determine the transmission directions indicated by the composite indicator based on the composite indicator and the mapping relationship table, and may further treat the determined transmission directions as the transmission directions of the n transmission units. As shown in the example of FIG. 4B, the target indication information in the time slot a may include a composite indicator 00. Then, the terminal may determine that the transmission directions of the time slot a+1 and time slot a+2 are both the uplink direction.

In the second manner, the target indication information may include n individual indicators correspond to the n transmission units, respectively. Each individual indicator may be configured to indicate the transmission direction of the corresponding transmission unit, and the terminal may determine the transmission direction of each transmission unit among the n transmission units as the transmission direction indicated by the corresponding individual indicator.

In an embodiment, a mapping relationship table between the individual indicator and the transmission direction may be maintained in the terminal, and may be the same as the mapping relationship table shown in Table 2.

The terminal may determine the transmission direction indicated by each individual indicator based on the n individual indicators and the mapping relationship table, and further determine the transmission direction indicated by each individual indicator as the transmission direction of the corresponding transmission unit. As shown in the example of FIG. 4B, the target indication information in the time slot a may include individual indicators 00 and 01 that are arranged in sequence. Then, the terminal may determine that the transmission direction of the time slot a+1 is the downlink direction, and the transmission direction of the time slot a+2 is the uplink direction.

In step 404, the terminal transmits data through the n transmission units based on the transmission directions indicated by the target indication information.

In an embodiment, after determining the transmission direction of each of the n transmission units, the terminal may send data to the base station through the transmission unit whose transmission direction is the uplink direction among the n transmission units, and receive the data sent by the base station through the transmission unit whose transmission direction is the uplink direction among the n transmission units.

As shown in the example of FIG. 4B, if the terminal determines that the transmission direction of the time slot a+1 is the downlink direction, and the transmission direction of the time slot a+2 is the uplink direction, the terminal may receive the data sent by the base station through the time slot a+ 1, and send the data to the base station through the time slot a+2.

In the data transmission method according to the embodiment of the present disclosure, the terminal receives target indication information sent by the base station, determines transmission directions of n transmission units based on the target indication information, and then transmits data through the n transmission units based on the determined transmission directions. In this way, the transmission directions of the transmission units can be determined flexibly, and can also be dynamically changed according to the data transmission requirement of the communication system, thereby meeting the requirement of the new-generation communication system on the dynamically changing transmission directions.

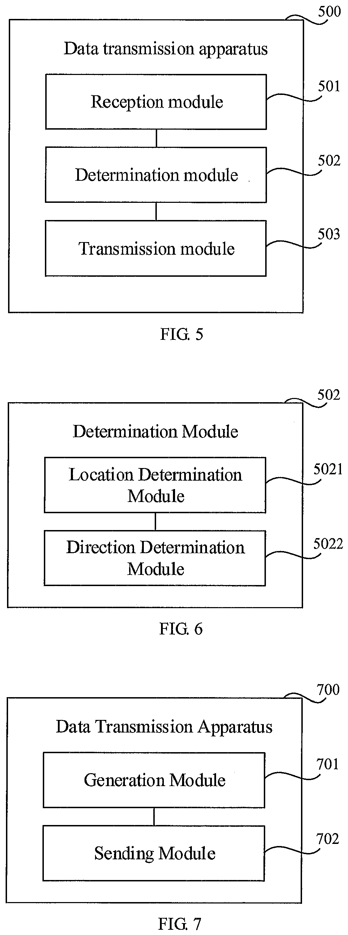

FIG. 5 is a block diagram of a data transmission apparatus 500 according to an embodiment that is not part of the present invention as claimed. Referring to FIG. 5, the apparatus 500 includes a reception module 501, a determination module 502, and a transmission module 503.

The reception module 501 is configured to receive target indication information sent by the base station.

The determination module 502 is configured to determine transmission directions of n transmission units based on the target indication information. The transmission directions include the uplink direction and the downlink direction, and n is a positive integer larger than or equal to 1.

The transmission module 503 is configured to transmit data through the n transmission units based on transmission directions indicated by the target indication information.

As shown in FIG. 6, in an embodiment that is not part of the present invention as claimed, the determination module 502 includes a location determination sub-module 5021 configured to determine locations of the n transmission units based on the target indication information, and a direction determination sub-module 5022 configured to determine transmission directions of the n transmission units based on the target indication information.

The location determination sub-module 5021 is configured to determine the transmission unit transmitting the target indication information as the target transmission unit, and further, according to the location of the target transmission unit, determine locations of the n transmission units associated with the location of the target transmission unit.

In an embodiment, the n transmission units may be consecutively located after and adjacent to the target transmission unit; or the n transmission units may include the target transmission unit and n-1 consecutive transmission units that are located after and adjacent to the target transmission unit.

In an embodiment, the target indication information includes location indication information; and the location determination sub-module 5021 is configured to determine locations of the n transmission units based on the location indication information.

In an embodiment, the target indication information may include a composite indicator configured to indicate the transmission directions of the n transmission units; and the determination module 502 is configured to determine the transmission directions indicated by the composite indicator as the transmission directions of the n transmission units.

In an embodiment, the target indication information may include n individual indicators that are configured to indicate the transmission directions, and correspond to the n transmission units, respectively. The determination module 502 is configured to determine the transmission direction of each transmission unit among the n transmission units as the transmission direction indicated by the corresponding individual indicator.

In an embodiment, the transmission module 503 is configured to: determine the transmission direction of each of the transmission units based on the target indication information, send data to the base station through the transmission unit whose transmission direction is the uplink direction among the n transmission units, and receive data sent by the base station through the transmission unit whose transmission direction is the downlink direction among the n transmission units.

In an embodiment, the n transmission units are data frames, subframes, time slots, or OFDM symbols.

In the data transmission apparatus according to the embodiment of the present disclosure, after the target indication information sent by the base station is received, the transmission directions of n transmission units are determined based on the target indication information, and data are transmitted through the n transmission units based on the determined transmission direction. In this way, the transmission directions of the transmission units can be determined flexibly, and can also be dynamically changed according to the data transmission requirement of the communication system, thereby meeting the requirement of the new-generation communication system on the dynamically changing transmission directions.

With regard to the apparatus in the forgoing described embodiments, the specific manner in which the respective modules perform the operations has been described in detail in the method embodiments, and will not be repeated herein.

FIG. 7 is a block diagram of a data transmission apparatus 700 according to an embodiment that is not part of the present invention as claimed. Referring to FIG. 7, the apparatus 700 may include a generation module 701 and a transmission module 702.

The generation module 701 is configured to generate target indication information.

The transmission module 702 is configured to send the target indication information to the terminal, so that the terminal determines the transmission direction of n transmission units based on the target indication information. The transmission directions include the uplink direction and the downlink direction, and n is a positive integer larger than or equal to 1.

In an embodiment, the target indication information includes location indication information for indicating locations of the n transmission units.

In an embodiment, the target indication information includes a composite indicator configured to indicate transmission directions of the n transmission units.

In an embodiment, the target indication information includes n individual indicators that correspond to the n transmission units, respectively, and each individual indicator is configured to indicate the transmission direction of the corresponding transmission unit.

In an embodiment, the n transmission units are data frames, subframes, time slots, or OFDM symbols.

In the data transmission apparatus according to the embodiment of the present disclosure, by sending target indication information to the terminal, the terminal can determine transmission directions of n transmission units based on the target indication information and then transmit the data through the n transmission units based on the determined transmission direction. In this way, the transmission directions of the transmission units can be determined flexibly, and can be dynamically changed according to the data transmission requirement of the communication system, thereby meeting the requirement of the new-generation communication system on the dynamically changing transmission directions.

With regard to the apparatus in the forgoing described embodiments, the specific manner in which the respective modules perform the operations has been described in detail in the method embodiments, and will not be repeated herein.

FIG. 8 is a block diagram of a data transmission apparatus 800 in accordance with an embodiment. For example, the apparatus 800 may be a mobile phone, a computer, a digital broadcast terminal, a messaging device, a gaming console, a tablet device, a medical device, a fitness equipment, a personal digital assistant, and the like

Referring to FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, videos, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense the duration and pressure associated with the touch or swipe action. In some embodiments, the multimedia component 808 includes a front camera and/or a rear camera. The front camera and the rear camera may receive external multimedia data while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive external audio signals when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, such as a keyboard, a click wheel, buttons, and the like. The buttons may include, but are not limited to, a home button, a volume button, a start button, and a lock button.

The sensor component 814 includes one or more sensors to provide status assessments of various aspects of the apparatus 800. For instance, the sensor component 814 may detect an on/off status of the apparatus 800, relative positioning of components, e.g., the display device and the mini keyboard of the apparatus 800, and the sensor component 814 may also detect a position change of the apparatus 800 or a component of the apparatus 800, presence or absence of user contact with the apparatus 800, orientation or acceleration/deceleration of the apparatus 800, and temperature change of the apparatus 800. The sensor component 814 may include a proximity sensor configured to detect the presence of nearby objects without any physical contact. The sensor component 814 may also include a light sensor, such as a CMOS or CCD image sensor, used for imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 4G, or 5G, or a combination thereof. In an embodiment, the communication component 816 receives broadcast signals or broadcast associated information from an external broadcast management system via a broadcast channel. In an embodiment, the communication component 816 further includes a near field communication (NFC) module to facilitate short-range communications. In an embodiment, the communication component 816 may be implemented based on a radio frequency identification (RFID) technology, an infrared data association (IrDA) technology, an ultra-wideband (UWB) technology, a Bluetooth (BT) technology, and other technologies.

In some embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

In some embodiments, a non-transitory computer readable storage medium is further provided. When instructions in the storage medium are executed by a processor in a mobile terminal, the mobile terminal can perform the data transmission method. For example, the mobile terminal may receive target indication information sent by the base station, determine transmission directions of the n transmission units based on the target indication information, with the transmission directions including uplink direction and downlink direction, and n being a positive integer larger than or equal to 1, and transmit data through the n transmission units based on the transmission directions indicated by the target indication information.

FIG. 9 is a block diagram of a data transmission apparatus 900 according to an embodiment. The data transmission apparatus 900 may be a base station, and as shown in FIG. 9, the data transmission apparatus 900 may include a processor 901, a receiver 902, a transmitter 903, and a memory 904. The receiver 902, the transmitter 903, and the memory 904 are connected to the processor 901 through a bus, respectively.

The processor 901 includes one or more processing cores. The memory 904 may be configured to store the software programs and modules. For example, the memory 904 may store an operation system 9041, and an application module 9042 to implement at least one function. The receiver 902 is configured to receive communication messages sent by other devices, and the transmitter 903 is configured to send communication messages to other devices.

In the embodiment, a non-transitory computer readable storage medium is further provided. When instructions in the storage medium are executed by a processor in a base station, the base station can perform the above described data transmission method. For example, the base station may generate target indication information, and send the target indication information to the terminal, so that the terminal can determine transmission directions of the n transmission units based on the target indication information. The transmission directions include the uplink direction and the downlink direction, and n is a positive integer larger than or equal to 1.

Other embodiments of the present disclosure will be apparent to those skilled in the art from consideration of the specification and practice of the present disclosure. This application is intended to cover any variations, uses, or adaptations of the present disclosure following the general principles thereof and including common knowledge or commonly used technical measures which are not disclosed herein. The embodiments are examples only, with a true scope of the present disclosure is indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A data transmission method, performed by a terminal (102), comprising
receiving (402) target indication information sent by a base station (101);
determining a transmission unit transmitting the target indication information as a target transmission unit, determining, based on a location of the target transmission unit and a location association rule stored in the terminal, n transmission units that are consecutively located after and adjacent to the target transmission unit, and determining (403) transmission directions of the n transmission units based on the target indication information, wherein the transmission directions comprise an uplink direction and a downlink direction, and n is a positive integer larger than or equal to 1, the n transmission units are data frames, subframes, time slots, or orthogonal frequency division multiplexing, OFDM, symbols, the location association rule defines a location, relative to the location of the target transmission unit, of a transmission unit associated with the target transmission unit, and the location association rule is sent by the base station in advance to the terminal through a physical layer signaling;
transmitting (404) data through the n transmission units according to the transmission directions indicated by the target indication information.

2. The method according to claim 1, wherein the target indication information comprises a composite indicator configured to indicate transmission directions of the n transmission units; and
determining transmission directions of the n transmission units in the data frame based on the target indication information comprises:
determining transmission directions indicated by the composite indicator as the transmission directions of the n transmission units.

3. The method according to claim 1, wherein the target indication information comprises n individual indicators configured to indicate transmission directions, the n individual indicators corresponding to the n transmission units, respectively; and
determining transmission directions of the n transmission units based on the target indication information comprises:
determining a transmission direction of each of the n transmission units as a transmission direction indicated by a corresponding individual indicator.

4. The method according to claim 1, wherein transmitting (404) data through the n transmission units based on the transmission directions indicated by the target indication information comprises:
determining a transmission direction of each of the n transmission units based on the target indication information;
sending data to the base station through a transmission unit whose transmission direction is the uplink direction among the n transmission units; and
receiving data sent by the base station through a transmission unit whose transmission direction is the downlink direction among the n transmission units.

5. A terminal, comprising
a processor (802);
a memory for storing a processor-executable instruction (804),
wherein the processor (802) is configured to:
receive target indication information sent by a base station;
determine a transmission unit transmitting the target indication information as a target transmission unit, determine, based on a location of the target transmission unit and a location association rule stored in the terminal, n transmission units that are consecutively located after and adj acent to the target transmission unit, and determine transmission directions of the n transmission units based on the target indication information, wherein the transmission directions comprise an uplink direction and a downlink direction, and n is a positive integer larger than or equal to 1, the n transmission units are data frames, subframes, time slots, or orthogonal frequency division multiplexing, OFDM, symbols, the location association rule defines a location, relative to the location of the target transmission unit, of a transmission unit associated with the target transmission unit, and the location association rule is sent by the base station in advance to the terminal through a physical layer signaling; and
transmit data through the n transmission units based on the transmission directions indicated by the target indication information.

## Patentansprüche

1. Datenübertragungsverfahren, das von einem Endgerät (102) durchgeführt wird, umfassend:
Empfangen (402) von Zielanzeigeinformationen, die von einer Basisstation (101) gesendet werden;
Bestimmen einer Übertragungseinheit, welche die Zielanzeigeinformationen überträgt, als eine Zielübertragungseinheit, Bestimmen, basierend auf einem Standort der Zielübertragungseinheit und einer in dem Endgerät gespeicherten Standortzuordnungsregel, von n Übertragungseinheiten, die nacheinander nach der und angrenzend an die Zielübertragungseinheit angeordnet sind, und Bestimmen (403) der Übertragungsrichtungen der n Übertragungseinheiten basierend auf den Zielanzeigeinformationen, wobei die Übertragungsrichtungen eine Uplink-Richtung und eine Downlink-Richtung umfassen, und wobei n eine positive ganze Zahl größer als oder gleich 1 ist, wobei die n Übertragungseinheiten Daten-Frames, Subframes, Zeitfenster oder Symbole eines orthogonalen Frequenzmultiplexverfahrens, OFDM, sind, wobei die Standortzuordnungsregel einen Standort, relativ zu dem Standort der Zielübertragungseinheit, einer Übertragungseinheit definiert, die der Zielübertragungseinheit zugeordnet ist, und wobei die Standortzuordnungsregel von der Basisstation im Voraus über eine Signalisierung der physikalischen Schicht an das Endgerät gesendet wird;
Übertragen (404) von Daten über die n Übertragungseinheiten entsprechend den Übertragungsrichtungen, die von den Zielanzeigeinformationen angezeigt werden.

2. Verfahren nach Anspruch 1, wobei die Zielanzeigeinformationen einen zusammengesetzten Indikator umfassen, der dazu ausgebildet ist, Übertragungsrichtungen der n Übertragungseinheiten anzuzeigen; und
wobei das Bestimmen der Übertragungsrichtungen der n Übertragungseinheiten in dem Daten-Frame basierend auf den Zielanzeigeinformationen umfasst:
Bestimmen der Übertragungsrichtungen, die von dem zusammengesetzten Indikator angezeigt werden, als Übertragungsrichtungen der n Übertragungseinheiten.

3. Verfahren nach Anspruch 1, wobei die Zielanzeigeinformationen n einzelne Indikatoren umfassen, die dazu ausgebildet ist, Übertragungsrichtungen anzuzeigen, wobei die n einzelnen Indikatoren jeweils den n Übertragungseinheiten entsprechen; und
wobei das Bestimmen der Übertragungsrichtungen der n Übertragungseinheiten basierend auf den Zielanzeigeinformationen umfasst:
Bestimmen einer Übertragungsrichtung jeder der n Übertragungseinheiten als eine Übertragungsrichtung, die von einem entsprechenden einzelnen Indikator angezeigt wird.

4. Verfahren nach Anspruch 1, wobei das Übertragen (404) der Daten über die n Übertragungseinheiten basierend auf den Übertragungsrichtungen, die von den Zielanzeigeinformationen angezeigt werden, umfasst:
Bestimmen einer Übertragungsrichtung jeder der n Übertragungseinheiten basierend auf den Zielanzeigeinformationen;
Senden von Daten an die Basisstation über eine Übertragungseinheit, deren Übertragungsrichtung die Uplink-Richtung unter den n Übertragungseinheiten ist; und
Empfangen von Daten, die von der Basisstation über eine Übertragungseinheit gesendet werden, deren Übertragungsrichtung die Downlink-Richtung unter den n Übertragungseinheiten ist.

5. Endgerät, das aufweist:
einen Prozessor (802);
einen Speicher zum Speichern von Anweisungen (804), die von einem Prozessor ausgeführt werden können,
wobei der Prozessor (802) für Folgendes ausgebildet ist:
Empfangen der Zielanzeigeinformationen, die von einer Basisstation gesendet werden;
Bestimmen einer Übertragungseinheit, welche die Zielanzeigeinformationen überträgt, als eine Zielübertragungseinheit, Bestimmen, basierend auf einem Standort der Zielübertragungseinheit und einer in dem Endgerät gespeicherten Standortzuordnungsregel, von n Übertragungseinheiten, die nacheinander nach der und angrenzend an die Zielübertragungseinheit angeordnet sind, und Bestimmen von Übertragungsrichtungen der n Übertragungseinheiten basierend auf den Zielanzeigeinformationen, wobei die Übertragungsrichtungen eine Uplink-Richtung und eine Downlink-Richtung umfassen, und wobei n eine positive ganze Zahl größer als oder gleich 1 ist, wobei die n Übertragungseinheiten Daten-Frames, Subframes, Zeitfenster oder Symbole eines orthogonalen Frequenzmultiplexverfahrens, OFDM, sind, wobei die Standortzuordnungsregel einen Standort, relativ zu dem Standort der Zielübertragungseinheit, einer Übertragungseinheit definiert, die der Zielübertragungseinheit zugeordnet ist, und wobei die Standortzuordnungsregel von der Basisstation im Voraus über eine Signalisierung der physikalischen Schicht an das Endgerät gesendet wird; und
Übertragen von Daten über die n Übertragungseinheiten basierend auf den Übertragungsrichtungen, die von den Zielanzeigeinformationen angezeigt werden.

## Revendications

1. Procédé de transmission de données, mis en oeuvre par un terminal (102), comprenant
la réception (402) d'informations d'indication de cible envoyées par une station de base (101) ;
la détermination d'une unité de transmission transmettant les informations d'indication de cible en guise d'unité de transmission cible, la détermination, en fonction d'un emplacement de l'unité de transmission cible et d'une règle d'association d'emplacement stockée dans le terminal, de n unités de transmission situées consécutivement après l'unité de transmission cible et adjacentes à celle-ci, et la détermination (403) de directions de transmission des n unités de transmission en fonction des informations d'indication de cible, dans lequel les directions de transmission comprennent une direction de liaison ascendante et une direction de liaison descendante, et n est un nombre entier positif supérieur ou égal à 1, les n unités de transmission sont des trames de données, des sous-trames, des intervalles de temps, ou des symboles de multiplexage par répartition orthogonale de la fréquence, OFDM, la règle d'association d'emplacement définit un emplacement, par rapport à l'emplacement de l'unité de transmission cible, d'une unité de transmission associée à l'unité de transmission cible, et la règle d'association d'emplacement est envoyée par la station de base à l'avance au terminal par l'intermédiaire d'une signalisation de couche physique ;
la transmission (404) de données par l'intermédiaire des n unités de transmission selon les directions de transmission indiquées par les informations d'indication de cible.

2. Procédé selon la revendication 1, dans lequel les informations d'indication de cible comprennent un indicateur composite configuré pour indiquer des directions de transmission des n unités de transmission ; et
la détermination de directions de transmission des n unités de transmission dans la trame de données en fonction des informations d'indication de cible comprend :
la détermination de directions de transmission indiquées par l'indicateur composite comme étant les directions de transmission des n unités de transmission.

3. Procédé selon la revendication 1, dans lequel les informations d'indication de cible comprennent n indicateurs individuels configurés pour indiquer des directions de transmission, les n indicateurs individuels correspondant aux n unités de transmission, respectivement ; et
la détermination de directions de transmission des n unités de transmission en fonction des informations d'indication de cible comprend :
la détermination d'une direction de transmission de chacune des n unités de transmission comme étant une direction de transmission indiquée par un indicateur individuel correspondant.

4. Procédé selon la revendication 1, dans lequel la transmission (404) de données par l'intermédiaire des n unités de transmission en fonction des directions de transmission indiquées par les informations d'indication de cible comprend :
la détermination d'une direction de transmission pour chacune des n unités de transmission en fonction des informations d'indication de cible ;
l'envoi de données à la station de base par l'intermédiaire d'une unité de transmission dont la direction de transmission est la direction de liaison ascendante parmi les n unités de transmission ; et
la réception de données envoyées par la station de base par l'intermédiaire d'une unité de transmission dont la direction de transmission est la direction de liaison descendante parmi les n unités de transmission.

5. Terminal, comprenant :
un processeur (802) ;
une mémoire destinée à stocker une instruction exécutable par processeur (804),
dans lequel le processeur (802) est configuré pour :
recevoir des informations d'indication de cible envoyées par une station de base ;
déterminer une unité de transmission transmettant les informations d'indication de cible en guise d'unité de transmission cible, déterminer, en fonction d'un emplacement de l'unité de transmission cible et d'une règle d'association d'emplacement stockée dans le terminal, n unités de transmission situées consécutivement après l'unité de transmission cible et adjacentes à celle-ci, et déterminer des directions de transmission des n unités de transmission en fonction des informations d'indication de cible, dans lequel les directions de transmission comprennent une direction de liaison ascendante et une direction de liaison descendante, et n est un nombre entier positif supérieur ou égal à 1, les n unités de transmission sont des trames de données, des sous-trames, des intervalles de temps, ou des symboles de multiplexage par répartition orthogonale de la fréquence, OFDM, la règle d'association d'emplacement définit un emplacement, par rapport à l'emplacement de l'unité de transmission cible, d'une unité de transmission associée à l'unité de transmission cible, et la règle d'association d'emplacement est envoyée par la station de base à l'avance au terminal par l'intermédiaire d'une signalisation de couche physique ; et
transmettre des données par l'intermédiaire des n unités de transmission en fonction des directions de transmission indiquées par les informations d'indication de cible.
